# EUROPÄISCHE PATENTSCHRIFT

(11) **EP 3 509 790 B1**
(45) Veröffentlichungstag und Bekanntmachung des Hinweises auf die Patenterteilung: **22.12.2021**
(21) Anmeldenummer: 17771354.2
(22) Anmeldetag: 06.09.2017
(51) Int. Cl.: B24B 27/00, B23Q 17/24, B23Q 17/22, B24B 51/00, B24B 49/02, B24B 33/06, B23Q 11/00, B23Q 39/04, B24B 49/12, B24B 35/00

(54) **MASCHINE MIT REINIGUNGSEINRICHTUNG UND OPTISCHER MESSEINRICHTUNG**
MACHINE HAVING A CLEANING DEVICE AND OPTICAL MEASURING DEVICE
MACHINE COMPRENANT UN DISPOSITIF DE NETTOYAGE ET UN DISPOSITIF DE MESURE OPTIQUE

(30) Priorität: 08.09.2016 DE 102016116816
(43) Veröffentlichungstag der Anmeldung: 17.07.2019
(73) Patentinhaber: Thielenhaus Technologies GmbH, 42285 Wuppertal (DE)
(72) Erfinder: SCHMITZ, Thomas, 42929 Wermelskirchen (DE)
(74) Vertreter: Feucker, Max Martin
(86) Internationale Anmeldenummer: PCT/EP2017/072350
(87) Internationale Veröffentlichungsnummer: WO 2018/046543

(56) Entgegenhaltungen:
- EP-A2- 1 044 762
- DE-A1- 10 315 218
- DE-A1-102010 002 019
- DE-U1-202012 008 938

## Beschreibung

Die vorliegende Erfindung betrifft eine Maschine zum Bearbeiten von Werkstücken, mit mindestens drei Stationen und mit einem bewegbar gelagerten Tisch, wobei an dem Tisch mindestens eine insbesondere rotierend antreibbare Spannvorrichtung zum Einspannen eines Werkstückes angeordnet ist und das eingespannte Werkstück durch eine Bewegung des Tisches in die Arbeitsbereiche der Stationen transportierbar ist, wobei eine erste Station als Bearbeitungsstation zur Bearbeitung einer Oberfläche des Werkstücks eingerichtet ist, in der ein das Werkzeug zur Bearbeitung haltender Werkzeughalter insbesondere rotierend antreibbar angeordnet ist, wobei der Werkzeughalter mittels einer Zustelleinheit zu dem Werkstück zustellbar und mittels einer Ausrichteinheit gegenüber dem Werkstück ausrichtbar gelagert ist.

Eine solche Maschine ist aus DE 100 16 897 B4 bekannt. Werden während der Bearbeitung sowohl das Werkzeug um eine Achse als auch das Werkstück um eine Achse rotierend angetrieben, so spricht man auch von einer End- oder Finishbearbeitung, welche insbesondere als Mikrofinishen oder Superfinishen bekannt ist. Da die Anforderungen an die Form- und Maßtoleranzen sehr hoch sind, wird beim Einfahren der Maschine für eine neue Werkstückcharge zunächst ein erstes Werkstück der Charge mit der Maschine endbearbeitet, wobei auch weitere Vorbearbeitungsschritte an anderen Stationen der Maschine stattfinden können. Um die Oberflächeneigenschaft der endbearbeiteten Oberfläche zu bestimmen, muss das Werkstück aus der Spannvorrichtung entfernt werden. Die Oberflächeneigenschaft, wie Ebenheit oder Rauheit, kann im Folgenden mittels eines Weißlichtinterferometers bestimmt werden. Aus dem Interferenzbild kann der geübte Maschinenführer erkennen, in welche Richtung die Ausrichteinheit linear oder rotatorisch manuell verstellt werden muss, um der vorgegebenen Toleranz bei der Bearbeitung des nächsten Werkstückes näher zu kommen oder ggf. einzuhalten. So kann beispielsweise die Ebenheit der endbearbeiteten Oberfläche auf ihre durch die Toleranz vorgegebene leichte konkave oder konvexe Wölbung untersucht werden, wobei in Abhängigkeit von dem Interferenzbild der Anstellwinkel des Werkzeuges zu dem Werkstück geändert wird.

Eine weitere Maschine mit den eingangs genannten Merkmalen ist aus DE 20 2012 008 938 U1 bekannt.

Da das Interferenzbild der endbearbeiteten Oberfläche durch kleinste Verunreinigungen verfälscht wird, wird die endbearbeitete Oberfläche vor der optischen Messung mittels chemischer Lösungsmittel von Kühl- und/oder Schmierstoffrückständen gereinigt. Da zum einen das relativ teure Weißlichtinterferometer parallel zum Einfahren mehrerer Maschinen verwendet wird und nur von speziell geschultem Personal benutzt werden kann und zum anderen mehrere Werkstücke einer Charge bearbeitet werden müssen, bis die geforderten Toleranzen eingehalten werden, kann es durchaus vorkommen, dass das Einfahren einer Maschine für eine neue Werkstückcharge bis zu mehreren Tagen dauert. Die bekannten Maschinen haben daher beim Einfahren für neue Werkstückchargen relativ lange Stillstandszeiten.

Aufgabe der vorliegenden Erfindung ist es daher, die mit Bezug zum Stand der Technik geschilderten Probleme zu lösen und insbesondere eine Maschine anzugeben, die schneller zum kontinuierlichen Bearbeiten einer neuen Werkstückcharge bereitsteht.

Gelöst wird die Aufgabe durch eine Maschine und ein Verfahren mit den Merkmalen der unabhängigen Ansprüche. Vorteilhafte Weiterbildungen der Maschine und des Verfahrens sind in den abhängigen Ansprüchen und in der Beschreibung angegeben.

Gelöst wird die Aufgabe durch eine Maschine mit den eingangs genannten Merkmalen, wobei eine zweite Station eine Reinigungseinrichtung zum Entfernen von Kühl- und/oder Schmierstoffrückständen von der bearbeiteten Oberfläche aufweist und wobei eine dritte Station eine Messeinrichtung zum optischen Bestimmen mindestens einer Oberflächeneigenschaft der endbearbeiteten und gereinigten Oberfläche des Werkstücks aufweist, wobei ferner die Messseinrichtung mit einer Auswertereinheit verbunden ist, die die optisch bestimmte Oberflächeneigenschaft auswertet und auf Basis der Auswertung vorgibt, um welches Maß die Ausrichtung des Werkzeughalters mittels der Ausrichteinheit zur Einhaltung von Toleranzvorgaben nachjustiert werden muss.

Die Erfindung ist somit mit dem Vorteil verbunden, dass die Bestimmung der Oberflächeneigenschaft der endbearbeiteten Oberfläche unmittelbar in der Maschine erfolgen kann, wobei aufgrund der Reinigungseinrichtung sichergestellt ist, dass das Messergebnis nicht durch Verschmutzungen verfälscht ist. Da zudem die Auswerteeinheit vorgibt, in welche Richtung der Werkstückhalter für die Bearbeitung des nächsten Werkstückes verstellt werden muss, kann die Maschine auch von ungeübtem Personal eingefahren werden.

Der bewegbar gelagerte Tisch ist insbesondere ein Rundtisch, der rotatorisch antreibbar ist, so dass die insbesondere mehreren Spannvorrichtungen bei der Bewegung von einer Station zur nächsten Station eine kreisbogenförmige Bewegungsbahn beschreiben. Das Werkstück muss somit für die Bearbeitung, Reinigung und Messung in der Maschine nur einmal in die Spannvorrichtung eingespannt werden.

Die Spannvorrichtungen sind insbesondere jeweils rotierend antreibbar. Dementsprechend ist ein Antrieb für die Spannvorrichtungen vorgesehen.

Zudem kann ein Antrieb für den Werkzeughalter vorgesehen sein, der den Werkzeughalter zu einer Bewegung des Werkzeughalters während der Endbearbeitung des Werkstückes in der Station antreibt. Insbesondere kann der Werkzeughalter entweder zu einer linearen Oszillationsbewegung antreibbar sein oder zu einer Rotationsbewegung um die Werkzeughalterachse. Werden sowohl die Spannvorrichtung rotatorisch angetrieben als auch der Werkzeughalter zu einer Bewegung während der Bearbeitung angetrieben, so spricht man von einer Finishbearbeitung, die auch als Mikrofinishen und Superfinishen bekannt ist.

Während der Werkzeughalter mittels der Zustelleinheit insbesondere linear an das in der Spannvorrichtung eingespannte Werkstück zustellbar ist, kann mittels der Ausrichteinheit eingestellt werden, wie der Werkzeughalter in der zugestellten Position zu dem Werkstück ausgerichtet ist. Insbesondere kann die Ausrichtung durch lineares Verschieben entlang der drei Raumrichtungen als auch um Verschwenken um bis zu drei orthogonal zueinander stehende Schwenkachsen ausgerichtet werden. Prinzipiell kann die Ausrichtung des Werkzeughalters manuell erfolgen.

Die Zustelleinheit umfasst insbesondere einen elektrisch antreibbaren Schlitten zum Zustellen des Werkzeughalters an das Werkstück.

Die Reinigungseinrichtung der zweiten Station ist so eingerichtet, dass die während der Endbearbeitung aufgebrachten Kühl- und/oder Schmierstoffmittel von der endbearbeiteten Oberfläche entfernt werden. Hierzu kann insbesondere vorgesehen sein, dass die zweite Station von benachbarten Stationen durch Trennmittel, beispielsweise beweglich gelagerte Trennwände, getrennt wird, so dass eine Kontamination der weiteren Stationen durch das Reinigungsmittel verhindert wird. Da chemische Lösungsmittel nicht nur den Endbearbeitungsprozess stören können sondern auch Maschinenelemente angreifen könnten, wurde bisher davon Abstand genommen Reinigungseinrichtungen in Maschinen zur Endbearbeitung von Werkstücken zu integrieren.

Insbesondere verwendet die Reinigungseinrichtung daher als Reinigungsmittel keine chemischen Lösungsmittel. Bevorzugt umfasst die Reinigungseinrichtung mittel zum Erzeugen eines Kohlenstoffdioxids(CO₂)-Schneestrahls. Der mindestens eine CO₂-Schneestrahl entfernt die Kühl- und/oder Schmierstoffrückstände ohne die endbearbeitete Oberfläche zu verändern.

Alternativ kann die Reinigungseinrichtung einen Laser umfassen, mittels dessen die Kühl- und/oder Schmierstoffrückstände verdampft werden können.

Die Reinigungseinrichtung kann insbesondere Elemente umfassen, die in eine das Werkstück umschließende Stellung zur Ausbildung einer Kammer gebracht werden können, in welcher der CO₂-Schneestrahl oder der Laserstrahl eingebracht wird. An diesem die Kammer bildende Elemente kann dann entweder der Laser oder die Düse zur Erzeugung des CO₂-Schneestrahls angeordnet sein. Im Falle der Bearbeitung mit CO₂ kann an der Kammer auch eine Abzugsvorrichtung für das verdampfte CO₂ vorgesehen sein.

Die optische Messeinrichtung umfasst insbesondere eine Lichtquelle, die Licht in Richtung der endbearbeiteten Oberfläche emittiert. Die Messeinrichtung umfasst ferner einen Sensor, der zumindest das von der endbearbeiteten Oberfläche reflektierte Licht erfasst. Insbesondere umfasst die Messeinrichtung ein Interferometer, bevorzugt ein Weißlichtinterferometer. Das von dem Sensor erfasste (Interferenz)-Bild gibt somit die Oberflächeneigenschaft der endbearbeiteten Oberfläche wieder. Die Oberflächeneigenschaft kann somit ohne mechanisches Einwirken auf die endbearbeitete Oberfläche bestimmt werden.

Aus dem von dem Sensor erfassten Bild kann mittels bekannter Verfahren insbesondere die Ebenheit und/oder Rauheit der Oberfläche bestimmt werden. Durch die Integration der Messeinrichtung in eine Station der Maschine kann für jedes bearbeitete Werkstück die von der optischen Messeinrichtung erfasste Oberflächeneigenschaft gespeichert werden, so dass eine Kontrolle der Qualität der Bearbeitung im Nachhinein möglich ist.

Die Auswerteeinheit ist so eingerichtet, dass sie beispielsweise auf Basis des von der Messeinrichtung erfassten Bildes vorgeben kann, in welche Richtung und um welche Größenordnung die Auswerteeinheit verstellt werden muss, so dass bei dem nachfolgend bearbeiteten Werkstück die vorgegebenen Toleranzen eingehalten werden kann. Auf diese Weise können ungeübte Maschinenführer die Ausrichteinheit im Idealfall unmittelbar nach der Bearbeitung des ersten Werkstückes so nachjustieren, dass alle folgenden Werkstücke die Toleranzen einhalten. Zumindest ist das Einfahren der Maschine aufgrund der unmittelbaren Vorgabe der Nachjustierung nach der Bearbeitung nur weniger Werkstücke möglich.

Insbesondere vergleicht die Auswerteeinheit die jeweils erfassten Oberflächeneigenschaften mit theoretisch vorgegebenen oder experimentell bestimmten Referenzbildern, um basierend darauf das Maß der Nachjustierung berechnen zu können. Mit der Auswerteeinheit ist es somit möglich, die Nachjustierung der Ausrichteinheit nach dem erstmaligen Einfahren auch zwischen der Bearbeitung einzelner Werkstücke einer Werkstückcharge vorzunehmen, so dass letztlich auch noch engere Toleranzen eingehalten werden können.

Damit auch der Schritt des manuellen Nachjustierens entfällt, umfasst die Ausrichteinheit bevorzugt elektrisch ansteuerbare Aktuatoren, so dass die Ausrichteinheit in Abhängigkeit der von der Auswerteeinheit ausgewerteten Oberflächeneigenschaften automatisch nachjustiert werden kann. Solche elektrisch ansteuerbare Ausrichteinheiten waren für den Einsatz in diesen Maschinen aufgrund ihres hohen Preises bisher nicht wirtschaftlich sinnvoll, was sich dadurch geändert hat, dass das Ergebnis der Oberflächenanalyse bereits kurz nach der Endbearbeitung vorliegt.

Die eingangs genannte Aufgabe wird auch gelöst durch ein Verfahren gemäß Anspruch 9 zum Betreiben einer Maschine zum Endbearbeiten einer Oberfläche eines Werkstückes, umfassend die folgenden Schritte:
- Bearbeiten, insbesondere Endbearbeiten der Oberfläche des Werkstückes mittels eines ausrichtbaren Werkzeuges in einer ersten Station der Maschine,
- Entfernen von Schmier- und/oder Kühlmittelrückständen von der endbearbeiteten Oberfläche in einer zweiten Station der Maschine,
- Bestimmen mindestens einer Oberflächeneigenschaft der endbearbeiteten und gereinigten Oberfläche des Werkstücks mittels eines optischen Verfahrens in einer dritten Station der Maschine,
- Auswerten der optisch bestimmten Oberflächeneigenschaft und
- Ausrichten des Werkzeuges in Abhängigkeit der ausgewerteten optisch bestimmten Oberflächeneigenschaft für die Bearbeitung eines weiteren Werkstückes und/oder Speichern der optisch bestimmten Oberflächeneigenschaft.

Insbesondere ist vorgesehen, dass die Ausrichtung, beispielsweise der Anstellwinkel des Werkzeuges oder seine relative Position gegenüber dem Werkstück in Abhängigkeit von der optisch bestimmten Ebenheit der Oberfläche automatisch geändert wird. Die Maschine kann sich somit selbst einfahren. Die mit Bezug zu der Maschine offenbarten Merkmale und Vorteile lassen sich auf das Verfahren anwenden und übertragen und umgekehrt.

Die Erfindung sowie das technische Umfeld werden im Folgenden anhand der Figuren beispielhaft erläutert. Es zeigen schematisch
- Figur 1:: eine Draufsicht auf eine Maschine und
- Figur 2:: einen Längsschnitt durch eine Reinigungsvorrichtung der Maschine.

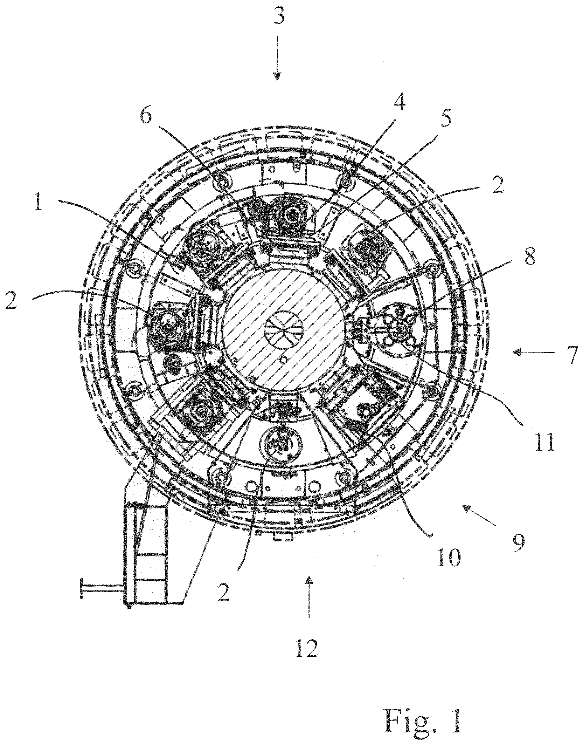

Die in Figur 1 dargestellte Maschine umfasst einen als Rundtisch ausgebildeten Tisch 1, an welchem mehrere Spannvorrichtungen 2 ausgebildet sind. Die Spannvorrichtungen 2 können durch Rotation des Tisches 1 jeweils zu einer benachbarten Station gebracht werden. In einer Ladestation 12 wird ein Werkstück in die entsprechende Spannvorrichtung 2 gespannt. In den folgenden Stationen erfolgt beispielsweise eine spanende Bearbeitung. In der als erste Station 3 gekennzeichneten Station erfolgt sodann eine Finishbearbeitung, während derer die Spannvorrichtung 2 mit dem darin fixierten Werkstück rotatorisch angetrieben wird. Gleichzeitig wird ein das Werkzeug haltende Werkzeughalter 4 relativ zu dem sich rotierenden Werkstück rotatorisch angetrieben.

Der Werkzeughalter 4 wird in der ersten Station 3 mittels einer Zustelleinheit 5 linear an das Werkstück zugestellt, während die Ausrichtung des Werkzeughalters 4 durch eine Ausrichteinheit 6 geändert werden kann.

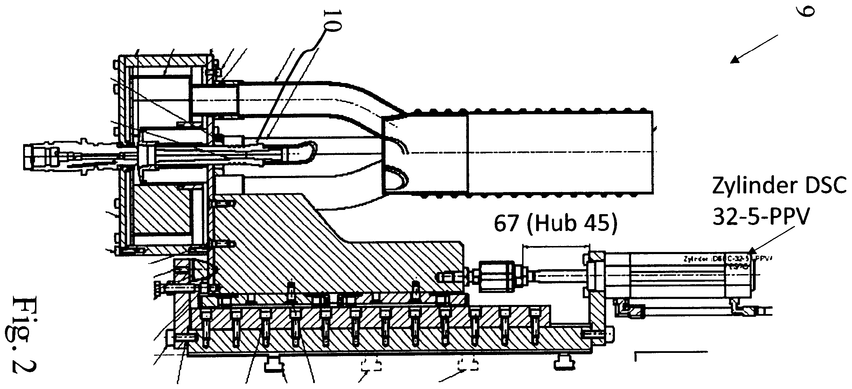

Im Folgenden wird das endbearbeitete Werkstück mit der Spannvorrichtung 2 in eine zweite Station 7 überführt, in welcher eine Reinigungseinrichtung 8 angeordnet ist. Die zweite Station 7 kann durch geeignete Trennmittel von benachbarten Stationen isoliert werden. Wie aus der Figur 2 zu erkennen ist, umfasst die Reinigungseinrichtung 8 eine Kammer 11, welche über dem Werkstück verschlossen werden kann. In der Kammer 11 wird ein CO₂-Strahl auf die zu reinigende Oberfläche des Werkstückes gerichtet. Das verdampfte Kohlendioxid wird durch eine Abzugseinrichtung abgezogen.

Nach der Reinigung wird das Werkstück in eine dritte Station 9 überführt, in welcher eine Messeinrichtung 10 angeordnet ist. Die Messeinrichtung 10 erfasst die Oberflächeneigenschaft der endbearbeiteten und gereinigten Oberfläche des Werkstückes. Diese Oberflächeneigenschaft kann gespeichert werden. Zudem ist die Messeinrichtung 10 an eine nicht dargestellte Auswerteeinheit angeschlossen, welche aufgrund des Messergebnisses bestimmt, um welches Maß die Ausrichteinheit 6 der ersten Station 3 nachjustiert werden muss, damit die vorgegebenen Toleranzen eingehalten werden. Beispielsweise kann ein Anstellwinkel des Werkzeughalters 4 zu dem Werkstück geändert werden, wobei die Auswerteeinheit vorgibt, um welchen Winkel die Ausrichteinheit 6 für die Bearbeitung eines nachfolgenden Werkstückes verschwenkt werden muss. Wenn die Ausrichteinheit 6 elektrisch betreibbar ist, kann die Änderung der Ausrichtung für die Bearbeitung eines nachfolgenden Werkstückes auch automatisch erfolgen.

### Bezugszeichenliste

- 1: Tisch
- 2: Spannvorrichtung
- 3: erste Station
- 4: Werkzeughalter
- 5: Zustelleinheit
- 6: Ausrichteinheit
- 7: zweite Station
- 8: Reinigungseinrichtung
- 9: dritte Station
- 10: Messeinrichtung
- 11: Kammer
- 12: Ladestation

## Patentansprüche

1. Maschine zum Bearbeiten von Werkstücken, mit mindestens drei Stationen und mit einem bewegbar gelagerten Tisch (1), wobei an dem Tisch mindestens eine Spannvorrichtung (2) zum Einspannen eines Werkstückes angeordnet ist und das eingespannte Werkstück durch eine Bewegung des Tisches in die Arbeitsbereiche der Stationen transportierbar ist, wobei eine erste Station (3) als Bearbeitungsstation zur Bearbeitung einer Oberfläche des Werkstücks eingerichtet ist, in der ein das Werkzeug zur Bearbeitung haltender Werkzeughalter (4) angeordnet ist, wobei der Werkzeughalter (4) mittels einer Zustelleinheit (5) zu dem Werkstück zustellbar und mittels einer Ausrichteinheit (6) gegenüber dem Werkstück ausrichtbar gelagert ist, **dadurch gekennzeichnet, dass** eine zweite Station (7) eine Reinigungseinrichtung (8) zum Entfernen von Kühl- und/oder Schmierstoffrückständen von der bearbeiteten Oberfläche aufweist und dass eine dritte Station (9) eine Messeinrichtung (10) zum optischen Bestimmen mindestens einer Oberflächeneigenschaft der endbearbeiteten und gereinigten Oberfläche des Werkstücks aufweist, wobei die Messeinrichtung (10) mit einer Auswerteeinheit verbunden ist, die dazu eingerichtet ist, die optisch bestimmte Oberflächeneigenschaft auszuwerten und auf Basis der Auswertung vorzugeben, um welches Maß die Ausrichtung des Werkzeughalters (4) mittels der Ausrichteinheit (6) zur Einhaltung von Toleranzvorgaben nachjustiert werden muss.

2. Maschine nach Anspruch 1, wobei die Ausrichteinheit (6) elektrisch ansteuerbare Aktuatoren umfasst und die Maschine so eingerichtet ist, dass die Ausrichteinheit (6) in Abhängigkeit der von der Auswerteeinheit ausgewerteten Oberflächeneigenschaft automatisch nachjustiert wird.

3. Maschine nach Anspruch 1 oder 2, wobei die Zustelleinheit (5) einen elektrisch betreibbaren Schlitten zum Zustellen des Werkzeughalters an das Werkstück umfasst.

4. Maschine nach einem der vorhergehenden Ansprüche, wobei die Reinigungseinrichtung (8) zum Erzeugen eines CO₂-Schneestrahls eingerichtet ist.

5. Maschine nach einem der Ansprüche 1 bis 3, wobei die Reinigungseinrichtung (8) einen Laser umfasst.

6. Maschine nach Anspruch 4 oder 5, wobei die Reinigungseinrichtung (8) eine das Werkstück wenigstens teilweise umschließende Kammer (11) enthält, in welcher der CO₂-Schneestrahl oder der Laserstrahl eingebracht wird.

7. Maschine nach einem der vorhergehenden Ansprüche, wobei die Messeinrichtung (10) ein Interferometer, insbesondere ein Weißlichtinterferometer umfasst.

8. Maschine nach Anspruch 7, wobei die Messeinrichtung (10) dazu eingerichtet ist, aus dem Interferenzbild die Ebenheit und/oder Rauheit der Oberfläche zu bestimmen.

9. Verfahren zum Betreiben einer Maschine gemäß einem der vorherigen Ansprüche zum Bearbeiten einer Oberfläche eines Werkstückes, umfassend die folgenden Schritte:
- Bearbeiten der Oberfläche des Werkstücks mittels eines ausrichtbaren Werkzeuges in einer ersten Station (3) der Maschine,
- Entfernen von Schmier- und/oder Kühlmittelrückständen von der endbearbeiteten Oberfläche in einer zweiten Station (7) der Maschine,
- Bestimmen mindestens einer Oberflächeneigenschaft der endbearbeiteten und gereinigten Oberfläche des Werkstücks mittels eines optischen Verfahrens in einer dritten Station (9) der Maschine,
- Auswerten der optisch bestimmten Oberflächeneigenschaft und
- Ausrichten des Werkzeuges in Abhängigkeit der ausgewerteten optisch bestimmten Oberflächeneigenschaft für die Bearbeitung eines weiteren Werkstücks und/oder Speichern der optisch bestimmten Oberflächeneigenschaft .

10. Verfahren nach Anspruch 9, wobei die Ausrichtung, insbesondere der Anstellwinkel des Werkzeuges gegenüber dem Werkstück in Abhängigkeit von der optisch bestimmten Ebenheit der Oberfläche automatisch geändert wird.

## Claims

1. Machine for machining workpieces, having at least three stations and having a movably mounted table (1), wherein at least one clamping device (2) for clamping a workpiece, and the clamped workpiece can be transferred into the working regions of the stations by a movement of the table, wherein a first station (3) is configured as a processing station for processing a surface of the workpiece with a tool held by a tool holder (4), wherein the tool holder (4) is connected to a feed unit (5) and the feed unit is mounted such that the feed unit can be aligned with respect to the workpiece by an alignment unit, **characterized in that** according to the invention, a second station (7) comprises a cleaning device (8) for removing coolant and/or lubricant residues from the machined surface, and a third station (9) comprises a measuring device (10) that optically determines at least one surface property of the finished and cleaned surface of the workpiece, wherein the measuring device (10) is connected to an evaluation unit, which is embodied to evaluate the optically determined surface property and to determine on the basis of the evaluation, the extent that orientation of the tool holder (4) has to be readjusted by the alignment unit (6) to comply with tolerance specifications.

2. Machine according to claim 1, wherein the alignment unit (6) comprises electrically controllable actuators and the machine is set up such that the alignment unit (6) is automatically readjusted as a function of the surface property evaluated by the evaluation unit.

3. Machine according to claim 1 and 2, wherein the feed unit (5) comprises an electrically operable carriage for delivering the tool holder to the workpiece.

4. Machine according to one of the preceding claims, wherein the cleaning device (8) comprises a nozzle for generating a CO₂ snow jet.

5. Machine according to any one of claims 1 to 3, wherein the cleaning device (8) comprises a laser producing a laser beam.

6. Machine according to claim 4 or 5, wherein the cleaning device (8) comprises a chamber at least partially enclosing the workpiece (11) in which the CO₂ snow jet or the laser beam is introduced.

7. Machine according to one of the preceding claims, wherein the measuring device (10) comprises an interferometer, in particular a white light interferometer.

8. Machine according to claim 7, wherein the measuring device (10) is equipped for determining the planarity and/or roughness of the surface from the interference image.

9. Method for operating a machine according to one of the preceding claims for machining a surface of a workpiece, comprising the following steps:
machining of the surface of the workpiece by an alignable tool in a first station (3) of the machine to produce a finished-machine surface,
removal of lubricant and/or coolant residues from the finished-machined surface in a second station (7) of the machine
optically determining at least one surface property of the cleaned finished-machined surface of the workpiece in a third station (9) of the machine,
evaluating the optically determined at least one surface property, and
aligning the tool as a function of the evaluated optically determined surface property for machining another workpiece and/or storing the optically determined surface property.

10. Method according to claim 9, wherein the alignment, in particular the angle of attack of the tool relative to the workpiece is changed automatically as a function of optically determined planarity of the surface.

## Revendications

1. Machine, destinée à usiner des pièces d'œuvre, dotée d'au moins trois postes et d'un plateau (1) logé en étant mobile, sur le plateau étant placé au moins un dispositif de serrage (2), destiné à enserrer une pièce d'œuvre et la pièce d'œuvre enserrée étant susceptible d'être transportée par un déplacement du plateau dans les zones de travail des postes, un premier poste (3) étant aménagé en tant que poste d'usinage d'une surface de la pièce d'œuvre, dans lequel est placé un porte-outil (4) qui maintient l'outil pour l'usinage, le porte-outil (4) étant susceptible d'être avancé vers la pièce d'œuvre au moyen d'une unité d'avance (5) et étant logé en étant susceptible d'être aligné par rapport à la pièce d'œuvre au moyen d'une unité d'alignement (6), **caractérisé en ce qu'**un deuxième poste (7) comporte un système de nettoyage (8), destiné à retirer des résidus d'agent de coupe et/ou d'agent lubrifiant et **en ce qu'**un troisième poste (9) comporte un système de mesure (10) pour la détermination optique d'au moins une propriété superficielle de la surface de la pièce d'œuvre finie et nettoyée, le système de mesure (10) étant connecté sur une unité d'évaluation, qui est aménagée pour évaluer la propriété superficielle optiquement déterminée et pour prescrire sur la base de l'évaluation de quelle valeur l'alignement du porte-outil (4) doit être réajusté au moyen de l'unité d'alignement (6) pour le respect de règles de tolérances.

2. Machine selon la revendication 1, l'unité d'alignement (6) comprenant des actionneurs, susceptibles d'être activés par voie électrique et la machine étant aménagée de sorte que l'unité d'alignement (6) soit automatiquement réajustée en fonction de la propriété superficielle évaluée par l'unité d'évaluation.

3. Machine selon la revendication 1 ou 2, l'unité d'avance (5) comprenant un chariot à commande électrique, destiné à faire avancer le porte-outil vers la pièce d'œuvre.

4. Machine selon l'une quelconque des revendications précédentes, le système de nettoyage (8) étant aménagé pour générer un jet de neige carbonique.

5. Machine selon l'une quelconque des revendications 1 à 3, le système de nettoyage (8) comprenant un laser.

6. Machine selon la revendication 4 ou 5, le système de nettoyage (8) contenant une chambre (11) entourant au moins partiellement la pièce d'œuvre, dans laquelle on introduit le jet de neige carbonique ou le rayon laser.

7. Machine selon l'une quelconque des revendications précédentes, le système de mesure (10) comprenant un interféromètre, notamment un interféromètre à lumière blanche.

8. Machine selon la revendication 7, le système de mesure (10) étant aménagé pour déterminer à partir de l'image d'interférence la planéité et/ou la rugosité de la surface.

9. Procédé opérationnel d'une machine selon l'une quelconque des revendications précédentes, destinée à usiner une surface d'une pièce d'œuvre, comprenant les étapes suivantes consistant à :
- usiner la surface de la pièce d'œuvre au moyen d'un outil susceptible d'être aligné dans un premier poste (3) de la machine,
- retirer des résidus d'agent lubrifiant et/ou d'agent de coupe de la surface finie dans un deuxième poste (7) de la machine,
- déterminer au moins une propriété superficielle de la surface finie et nettoyée de la pièce d'œuvre au moyen d'un procédé optique dans un troisième poste (9) de la machine,
- évaluer la propriété superficiellement optiquement déterminée, et
- aligner l'outil en fonction de la propriété optiquement déterminée évaluée, pour l'usinage d'une autre pièce d'œuvre et/ou mémoriser la propriété optiquement déterminée.

10. Procédé selon la revendication 9, l'orientation, notamment l'angle d'incidence de l'outil par rapport à la pièce d'œuvre étant automatiquement modifié(e) en fonction de la planéité optiquement déterminée de la surface.
